# EUROPEAN PATENT APPLICATION

(11) **EP 4 386 907 A1**
(43) Date of publication of application: **19.06.2024**
(21) Application number: 23160693.0
(22) Date of filing: 08.03.2023
(51) Int. Cl.: H01M 4/587, H01M 4/04, H01M 4/133, H01M 4/1393, H01M 10/0525

(54) **BATTERY**

(30) Priority: 12.12.2022 CN 202211589744
(71) Applicant: CALB Technology (Shenzhen) Co. Ltd., Futian District, Shenzhen Guangdong 518000 (CN)
(72) Inventor: LI, Xuerui, Changzhou City, Jiangsu Provice (CN); CHEN, Yanting, Changzhou City, Jiangsu Province (CN); WANG, Zhimin, Changzhou City, Jiangsu Province (CN); SHAN, Xuyi, Changzhou City, Jiangsu Province (CN); LI, Kui, Changzhou City, Jiangsu Province (CN)
(74) Representative: Becker, Eberhard

(57) **Abstract**

The disclosure discloses a battery, which includes a negative electrode sheet, the negative electrode sheet includes a current collector and an active material layer arranged on the surface of the current collector. The active material layer includes natural graphite, and it is characterized in that: when SOC is 0%, the total length of the internal interface and external interface of natural graphite is L₁, and when SOC is 100%, the total length of the internal interface and external interface of natural graphite is L₂, and L₁ and L₂ satisfy 1< L₂/ L₁<1.8. The natural graphite of the disclosure has fewer internal interface and external interface and is less prone to side reactions with electrolytes. When used in lithium-ion batteries, the natural graphite is able to effectively improve the cycle life of the lithium-ion batteries and inhibit the expansion of negative electrode sheet.

## Description

### BACKGROUND

### Technical Field

The present disclosure relates to the technical field of batteries, in particular to a battery.

### Description of Related Art

Lithium-ion batteries are commonly used in 3C digital, power tools, aerospace, energy storage, power vehicles and other fields due to their advantages such as high specific energy, no memory effect, and long cycle life. Negative electrode materials are an important part of lithium-ion batteries, and have an important influence on the cost and performance of batteries.

Spherical natural graphite is a common negative electrode material, which is obtained by spheroidizing and curling flake graphite. During the spheroidization process, flake graphite will produce pores including open pores and closed pores, and flake graphite is curled, folded, and tightly stacked, which will not only cause a certain degree of stress concentration inside, but also makes it possible to obtain spherical natural graphite sheets without chemical bonds. During the charge-discharge cycle of the lithium-ion battery, the continuous expansion of the graphite sheet will increase the internal pores after releasing part of the stress, and the spherical natural graphite will gradually crack so that more interfaces are exposed to contact with the electrolyte, resulting in intensified side reaction between spherical natural graphite and electrolyte. As a result, the capacity of the lithium-ion battery decays rapidly, and the cycle life is considerably reduced.

### SUMMARY

The purpose of the present disclosure is to provide a battery, thereby solving the problem of low cycle life of lithium-ion batteries.

According to the purpose of the present disclosure, a battery is provided, including a negative electrode sheet, the negative electrode sheet includes a current collector and an active material layer arranged on the surface of the current collector. The active material layer includes natural graphite, and it is characterized in that: when SOC is 0%, the total length of the internal interface and external interface of natural graphite is L₁, and when SOC is 100%, the total length of the internal interface and external interface of natural graphite is L₂, and L₁ and L₂ satisfy 1< L₂/ L₁<1.8, wherein the length of the internal interface is the sum of the lengths of the internal pores of particles of the natural graphite, and the length of the external interface is the sum of the circumferences of the outer edges of particles of the natural graphite.

SOC represents the state of charge, which is mainly used to reflect the remaining capacity of the battery, and the value of SOC is defined as the ratio of the remaining capacity account to the battery capacity.

The present disclosure controls the lengths of the internal interface and the external interface of the natural graphite, so that the natural graphite is able to maintain a high structural stability after the material releases the stress during the cycle. The natural graphite has fewer internal interface and external interface, and during the battery cycle test, the side reaction between natural graphite and electrolyte is reduced, so the battery capacity is not easy to decay, the cycle performance is improved, and the gas production is reduced due to the reduction of side reaction, and the expansion of the negative electrode sheet is reduced.

### BRIEF DESCRIPTION OF THE DRAWINGS

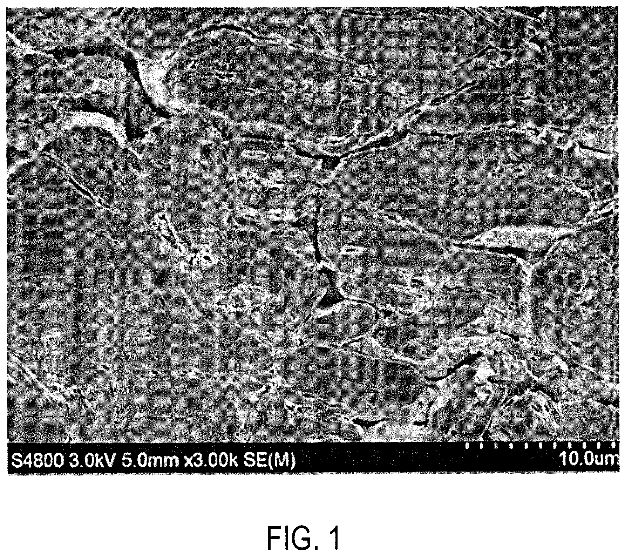

FIG. 1 is a 3000-magnification SEM image of the negative electrode sheet prepared in Example 1 after argon ion polishing.

### DESCRIPTION OF THE EMBODIMENTS

In order to enable those skilled in the art to better understand the solutions of the present disclosure, the technical solutions in the embodiments of the present disclosure will be clearly and completely described below. Clearly, the described embodiments are only a part of the embodiments of the present disclosure, not all the embodiment.

In the present disclosure, CMC is carboxymethyl cellulose, SBR is styrene-butadiene rubber, PVDF is polyvinylidene fluoride, NMP is N-methylpyrrolidone, EC is ethylene carbonate, EMC is ethyl methyl carbonate, DEC is diethyl carbonate, and DMC is dimethyl carbonate.

In the present disclosure, the internal interface, the external interface and their lengths are defined as follows: Referring to FIG. 1, the internal interface is the internal pores of the particles of the negative electrode active material, and the external interface is the outer edges of particles of the negative electrode active material. The length of the internal interface is the sum of the lengths of the internal pores of particles of the negative electrode active material, and the length of the external interface is the sum of the circumferences of the outer edges of particles of the negative electrode active material, and the unit of measurement is µm.

### Example 1

### 1) Preparation of negative electrode active material

a. Densification treatment: Spherical natural graphite with a particle size D50 of 8 µm was put into a cold isostatic press, and the pressure was raised to 50 MPa at a rate of 1 MPals. The pressure was held for 20 minutes, and then dropped to normal pressure at a rate of 1 MPa/s to obtain block graphite. Then, the block graphite was depolymerized and dispersed to obtain densified spherical graphite.
b. Surface modification: The densified spherical graphite obtained from step a along with coating agent bitumen were put into a mixer in a mass ratio of 90:10 to be fully mixed. Then their mixture was put into a carbonization furnace. Under the protection of nitrogen, the temperature was raised to 300°C at a rate of 2°C/min, the temperature was held for 2 hours and then raised to 1100°C at a rate of 5°C/min. The temperature then was held for 4 hours, naturally cooled to 80°C, and the mixture was taken out, dispersed and sieved to obtain a negative electrode active material with a core-shell structure.

### 2) Preparation of negative electrode sheet

The negative electrode active material prepared in step 1), conductive agent acetylene black, thickener CMC, and binder SBR were mixed at a mass ratio of 96.4:1:1.2:1.4, and then solvent deionized water was added to the resulting mixed material, they were stirred under the action of a vacuum mixer until the system was uniform to obtain a negative electrode slurry. The negative electrode slurry was evenly coated on two opposite surfaces of a copper foil with a dyne value of 58 and a thickness of 10 µm of the negative electrode current collector, dried at room temperature, and transferred to an oven for drying, and then cold-pressed and cut to obtain a negative electrode sheet with a compacted density of 1.45 g/cm³.

### 3) Preparation of positive electrode sheet

The positive electrode active material LiCNi_{0.3}Co_{0.3}Mn_{0.3})_{1.11}O₂, the conductive agent acetylene black, and the binder PVDF were mixed in a mass ratio of 96:2:2, and then the solvent NMP was added to the resulting mixed material, and stirred under the action of a vacuum mixer until the system was uniform to obtain a positive electrode slurry. The positive electrode slurry was evenly coated on two opposite surfaces of the aluminum foil of the positive electrode current collector, dried at room temperature, and transferred to an oven for drying, and then cold-pressed and cut to obtain a positive electrode sheet.

### 4) Preparation of electrolyte

EC, EMC, and DEC were mixed at a volume ratio of 1:1:1 to obtain an organic solvent, then fully dried lithium salt LiPF₆ was added to the organic solvent, and stirred until the lithium salt LiPF₆ was completely dissolved to obtain an electrolyte whose lithium salt LiPF₆ concentration is lmol/L.

### 5) Assembly of battery

The positive electrode sheet in step 3), the polyethylene separator, and the negative electrode sheet in step 2) were stacked in order, so that the polyethylene separator was between the positive electrode sheet and the negative electrode sheet for isolation, and then they were wound to obtain a bare cell. The bare cell was placed in the housing, and after drying, the electrolyte was injected therein. After performing processes such as vacuum sealing, standing still, formation, and shaping, the lithium-ion battery of this embodiment is obtained.

### Example 2

A lithium-ion battery was also prepared in this Example. The difference between the preparation process of the said lithium-ion battery and that of Example 1 lied in the preparation process of the negative electrode active material.

The preparation process of the negative electrode active material of the present Example was as follows:
a. Micro-oxidation treatment: A ceramic crucible and spherical natural graphite with a particle size D50 of 10 µm were dried at 120°C for 2 hours. The dried spherical natural graphite was placed in the ceramic crucible, and then put into a muffle furnace, the temperature was raised to 550°C at a rate of 5°C/min, and the temperature was held for 6 hours, so that the spherical natural graphite was fully oxidized by the air to obtain oxidized spherical graphite.
b. Densification treatment: The oxidized spherical graphite obtained in step a was put into a cold isostatic press, and the pressure was raised to 80 MPa at a rate of 1 MPa/s. The pressure was held for 15 minutes, and then dropped to normal pressure at a rate of 1 MPals to obtain block graphite. Then, the block graphite was depolymerized and dispersed to obtain densified spherical graphite.
c. Surface modification: The densified spherical graphite obtained from step b along with coating agent bitumen were put into a mixer in a mass ratio of 80:20 to be fully mixed. Then their mixture was put into a carbonization furnace. Under the protection of nitrogen, the temperature was raised to 300°C at a rate of 2°C/min, the temperature was held for 2 hours and then raised to 1300°C at a rate of 5°C/min. The temperature then was held for 4 hours, naturally cooled to 80°C, and the mixture was taken out, dispersed and sieved to obtain a negative electrode active material with a core-shell structure.

In this Example, the compacted density of the negative electrode sheet was 1.65 g/cm³.

### Example 3

A lithium-ion battery was also prepared in this Example. The difference between the preparation process of the said lithium-ion battery and that of Example 1 lied in the preparation process of the negative electrode active material.

The preparation process of the negative electrode active material of the present Example was as follows:
a. Micro-oxidation treatment: Spherical natural graphite with a particle size D50 of 18 µm was taken and completely immersed in potassium hydroxide solution of 7mol/L, mixed and stirred for 6 hours so that the spherical natural graphite is fully oxidized. Then, deionized water was utilized to wash the oxidized spherical natural graphite until the pH was 7, then the oxidized spherical natural graphite was put in an oven and dried at 70°C for 24 hours to obtain oxidized spherical graphite.
b. Densification treatment: The oxidized spherical graphite obtained in step a was put into a cold isostatic press, and the pressure was raised to 80 MPa at a rate of 1 MPals. The pressure was held for 15 minutes, and then dropped to normal pressure at a rate of 1 MPals to obtain block graphite. Then, the block graphite was depolymerized and dispersed to obtain densified spherical graphite.
c. Surface modification: The densified spherical graphite obtained from step b along with coating agent bitumen were put into a mixer in a mass ratio of 60:40 to be fully mixed. Then their mixture was put into a carbonization furnace. Under the protection of nitrogen, the temperature was raised to 500°C at a rate of 2°C/min, the temperature was held for 2 hours and then raised to 3000°C at a rate of 5°C/min. The temperature then was held for 2 hours, naturally cooled to 80°C, and the mixture was taken out, dispersed and sieved to obtain a negative electrode active material with a core-shell structure.

In this Example, the compacted density of the negative electrode sheet was 1.90 g/cm³.

### Example 4

A lithium-ion battery was also prepared in this Example. The difference between the preparation process of the said lithium-ion battery and that of Example 1 lied in the preparation process of the negative electrode active material.

The preparation process of the negative electrode active material of the present embodiment was as follows:
a. Micro-oxidation treatment: A ceramic crucible and spherical natural graphite with a particle size D50 of 10 µm were dried at 120°C for 2 hours. The dried spherical natural graphite was placed in the ceramic crucible, and then placed in a tube furnace and fed with oxygen, the temperature was raised to 450°C at a rate of 5°C/min, and the temperature was held for 3 hours, so that the spherical natural graphite was fully oxidized by oxygen to obtain oxidized spherical graphite.
b. Densification treatment: The oxidized spherical graphite obtained in step a along with bitumen with a softening point of 150°C were put into a mixer in a mass ratio of 95:5 and fully mixed. Then their mixture was put into a hot isostatic press, and the temperature was raised to 300°C at a rate of 2°C/min, and then the pressure was raised to 50 MPa at a rate of 1 MPa/s. The pressure was held for 30 minutes, and then dropped to normal pressure at a rate of 1 MPa/s. After cooling naturally to room temperature, the mixture was taken out to obtain densified spherical graphite.
c. Surface modification: The densified spherical graphite obtained from step b along with coating agent bitumen were put into a mixer in a mass ratio of 90:10 to be fully mixed. Then their mixture was put into a carbonization furnace. Under the protection of nitrogen, the temperature was raised to 300°C at a rate of 2°C/min, the temperature was held for 2 hours and then raised to 1100°C at a rate of 5°C/min. The temperature then was held for 4 hours, naturally cooled to 80°C, and the mixture was taken out, dispersed and sieved to obtain a negative electrode active material with a core-shell structure.

In this Example, the compacted density of the negative electrode sheet was 1.55 g/cm³.

### Example 5

A lithium-ion battery was also prepared in this Example. The difference between the preparation process of the said lithium-ion battery and that of Example 1 lied in the preparation process of the negative electrode active material.

The preparation process of the negative electrode active material of the present Example was as follows:
a. Micro-oxidation treatment: A ceramic crucible and spherical natural graphite with a particle size D50 of 10 µm were dried at 120°C for 2 hours. The dried spherical natural graphite was placed in the ceramic crucible, and then placed in a muffle furnace, the temperature was raised to 550°C at a rate of 5°C/min, and the temperature was held for 6 hours, so that the spherical natural graphite was fully oxidized by air to obtain oxidized spherical graphite.
b. Densification treatment: The oxidized spherical graphite obtained in step a along with bitumen with a softening point of 180°C were put into a mixer in a mass ratio of 90:10 and fully mixed. Then their mixture was put into a hot isostatic press, and the temperature was raised to 350°C at a rate of 2°C/min, and then the pressure was raised to 80 MPa at a rate of 1 MPa/s. The pressure was held for 20 minutes, and then dropped to normal pressure at a rate of 1 MPa/s. After cooling naturally to room temperature, the mixture was taken out to obtain densified spherical graphite is obtained.
c. Surface modification: The densified spherical graphite obtained from step b along with coating agent bitumen were put into a mixer in a mass ratio of 90:10 to be fully mixed. Then their mixture was put into a carbonization furnace. Under the protection of nitrogen, the temperature was raised to 500°C at a rate of 2°C/min, the temperature was held for 2 hours and then raised to 3000°C at a rate of 5°C/min. The temperature then was held for 2 hours, naturally cooled to 80°C, and the mixture was taken out, dispersed and sieved to obtain a composite graphite with a core-shell structure.
d. Mixing: The modified natural graphite in step c and artificial graphite were mixed thoroughly in a mass ratio of 3:7 to obtain the negative electrode active material of this Example.

In this Example, the compacted density of the negative electrode sheet was 1.70 g/cm³.

### Comparative Example 1

A lithium-ion battery is also prepared in this Comparative Example . The difference between the preparation process of the said lithium-ion battery and that of Example 1 lied in the preparation process of the negative electrode active material.

The preparation process of the negative electrode active material of the present Comparative Example was as follows:
Surface modification: The spherical natural graphite with a particle size D50 of 8 µm along with coating agent bitumen were put into a mixer in a mass ratio of 90:10 to be fully mixed. Then their mixture was put into a carbonization furnace. Under the protection of nitrogen, the temperature was raised to 300°C at a rate of 2°C/min, the temperature was held for 2 hours and then raised to 1100°C at a rate of 5°C/min. The temperature then was held for 4 hours, naturally cooled to 80°C, and the mixture was taken out, dispersed and sieved to obtain a negative electrode active material with a core-shell structure.

In this Comparative Example, the compacted density of the negative electrode sheet was 1.35 g/cm³.

### Comparative Example 2

A lithium-ion battery is also prepared in this Comparative Example. The difference between the preparation process of the said lithium-ion battery and that of Example 1 lied in the preparation process of the negative electrode active material.

The preparation process of the negative electrode active material of the present Comparative Example was as follows:
a. Micro-oxidation treatment: A ceramic crucible and spherical natural graphite with a particle size D50 of 10 µm were dried at 120°C for 2 hours. The dried spherical natural graphite was placed in the ceramic crucible, and then placed in a muffle furnace, the temperature was raised to 550°C at a rate of 5°C/min, and the temperature was held for 6 hours, so that the spherical natural graphite was fully oxidized by air to obtain oxidized spherical graphite.
b. Surface modification: The oxidized spherical graphite in step a along with coating agent bitumen were put into a mixer in a mass ratio of 90:10 to be fully mixed. Then their mixture was put into a carbonization furnace. Under the protection of nitrogen, the temperature was raised to 500°C at a rate of 2°C/min, the temperature was held for 2 hours and then raised to 3000°C at a rate of 5°C/min. The temperature then was held for 2 hours, naturally cooled to 80° C, and the mixture was taken out, dispersed and sieved to obtain a modified natural graphite with a core-shell structure.
c. Mixing: The modified natural graphite in step b and artificial graphite were mixed thoroughly in a mass ratio of 3:7 to obtain the negative electrode active material of this Comparative Example.

In this Comparative Example, the compacted density of the negative electrode sheet was 1.55 g/cm³.

Table 1 shows the conditions of preparation process of negative electrode materials of Examples 1-5 and Comparative Examples 1-2.

**Table 1**

| | Micro-oxidatio n | Densificatio n | Surface modification | | Ingredien t of active material |
|---|---|---|---|---|---|
| | | | Pre-carbonization /°C | Carbonization /°C | |
| Example 1 | - | Mechanical densification | 300 | 1100 | 100% modified natural graphite |
| Example 2 | Air | Mechanical densification | 300 | 1300 | 100% modified natural graphite |
| Example 3 | KOH | Mechanical densification | 500 | 3000 | 100% modified natural graphite |
| Example 4 | Oxygen | Fill densification | 300 | 1100 | 100% modified natural graphite |
| Example 5 | Air | Fill densification | 500 | 3000 | 30% modified natural graphite + 70% artificial graphite |
| Comparativ e Example 1 | - | - | 300 | 1100 | 100% modified natural graphite |
| Comparativ e Example 2 | Air | - | 500 | 3000 | 30% modified natural graphite + 70% artificial graphite |

### Performance Testing and Analysis

1. Test object: Lithium-ion batteries prepared in Examples 1-5 and Comparative Examples 1-2.
2. Test items

### 1) Length test of internal interface and external interface

Preparation of sample: A test object in the BOL state was taken and disassembled to take out the negative electrode sheet. Another test object produced in the same batch was taken, and subjected to a fully-charged-fully-discharged cycle at 25°C at a rate of 1C for 500 cycles, then discharged to 0% SOC at room temperature at a rate of 0.3C, and disassembled to take out the negative electrode sheet. DMC was utilized to clean the negative electrode sheets in two states, and the cleaned negative electrode sheets were dried in a vacuum box for 8 hours to be ready for use.

Test: Argon ion polishing equipment was utilized to cut the negative electrode sheets in the above two states to respectively obtain a non-destructive flat surface. A scanning electron microscope is utilized to perform scan test on the non-destructive flat surface, and at least three areas of the negative electrode sheet in each state were randomly selected to take a field of view picture in 3000-times magnification.

Data processing: The Nano Measurer software was utilized to measure the area S, the unit was µm², and the lengths of the internal interface and external interface of the negative electrode active material in the area were calculated to obtain the total length L of the internal interface and external interface (the total length of the internal interface and external interface in the initial state of the battery (BOL) was L₁, the total length of the internal interface and external interface after 500 cycles of the battery cycle was L₂), the unit was µm, and the total length of the internal interface and external interface per unit area of the negative active material was L/S, the unit was µm/mm². Each sample was tested at least three times to get an average value.

### 2) Cycle performance test

At 25°C, the test object was subjected to a fully-charged-fully-discharged cycle test at a rate of 1C until the capacity of the lithium-ion battery was decayed to 80% of the initial capacity, and the number of cycles was recorded.

### 3) Rebound test of negative electrode sheet

After the test object was fully charged and discharged at a rate of 1C at 25°C for 500 cycles, the test object was fully charged at a rate of 0.3C at room temperature, and the battery was disassembled within 12 hours. A negative electrode sample with a good appearance was selected, and the electrolyte on the surface thereof was dried. A digital display micrometer was utilized to obtain the thickness H of the fully charged negative electrode sheet sample through the rotating extrusion effect. At least two different areas of the negative sheet sample were selected for each battery, and each area was set with no less than 8 test points. When performing the test with the initial thickness H₀ of the negative electrode sheet, the test object was rolled first, and then the same method was used as above for testing.

Expansion rate of negative electrode sheet = (H-H₀)/(H₀-copper foil thickness)* 100%.

### 3. Test results: see Table 2.

**Table 2**

| Test object | L₂/L₁ | L₁/S(µm) | Compacted density (g/cm³) | Cycle performance (cycle) | Expansion rate of negative electrode sheet |
|---|---|---|---|---|---|
| Example 1 | 1.76 | 0.50 | 1.45 | 1884 | 30.0% |
| Example 2 | 1.40 | 0.32 | 1.65 | 2396 | 28.8% |
| Example 3 | 1.26 | 0.29 | 1.90 | 2683 | 28.0% |
| Example 4 | 1.13 | 0.13 | 1.55 | 2942 | 27.1% |
| Example 5 | 1.05 | 0.05 | 1.70 | 3296 | 26.4% |
| Comparative Example 1 | 2.04 | 0.63 | 1.35 | 645 | 36.0% |
| Comparative Example 2 | 1.90 | 0.54 | 1.55 | 1120 | 34.0% |

According to the data of Examples 1~5 in Table 2, it can be seen that the ratio of the total length of the internal interface and external interface of the densified spherical natural graphite after 500 cycles of the battery cycle to the total length of the internal interface and external interface in the initial state is controlled below 1.8. In addition, the total length of the internal interface and external interface per unit area in the initial state is controlled within the range of 0.05~0.5 µm/mm². After densification, the spherical natural graphite has less side reactions with the electrolyte and less battery capacity decay, so the cycle performance is improved. Also, excessive expansion of the negative electrode sheet will not occur.

The L₂/L₁ value and L₁/S of Comparative Examples 1-2 clearly exceed above-mentioned range, showing that the total length of internal interface and external interface per unit area of spherical natural graphite undergoing densification treatment in the initial state is relatively long, and the total length of internal interface and external interface is further increased after the cycle test. The inside of densified spherical natural graphite has more side reactions with the electrolyte, and the battery capacity rapidly decays, so the cycle performance is poor, and excessive expansion of the battery negative electrode sheet occurs.

Further, the reasons for the poor cycle performance of Comparative Examples 1-2 are analyzed from the perspective of the preparation process. Referring to the data of Example 5 and Comparative Example 2 in Table 2, Comparative Example 2 is different from Example 5 mainly in that Comparative Example 2 does not undergo densification treatment, and the cycle number of Comparative Example 2 is only 34% of that of Example 5, and compared with Example 5, the expansion rate of the negative electrode sheet is increased by 7.6%, thus indicating the importance of the densification treatment. On the one hand, the densification treatment helps to reduce the internal pores of spherical natural graphite, making the structure more compact, reducing the internal interface, and correspondingly reducing the side reaction with the electrolyte, so the cycle performance is improved. Meanwhile, due to the reduction of the side reaction, the gas production is reduced, and thus the expansion of the negative electrode sheet is reduced. On the other hand, the densification treatment improves the compactness of the spherical natural graphite, so that the coating agent may be uniformly coated, and the external interface is reduced to a certain extent, which may further improve the cycle performance.

Referring to the data of Example 1 and Comparative Example 1 in Table 2, Comparative Example 1 is different from Example 1 in that Comparative Example 1 does not undergo the micro-oxidation treatment and densification treatment, and only 645 cycles are performed when the capacity is dropped to 80%, and the expansion rate of the negative electrode sheet is as high as 36%, which shows that the micro-oxidation treatment, like the densification treatment, is the key to improving the battery cycle performance. The micro-oxidation treatment is able to etch the irregular structure of the surface of the spherical natural graphite, make the surface of the spherical natural graphite more smooth, reduce the external interface, and increase the nano-scale lithium-ion deintercalation channel, while being able to insert hydrophilic groups such as epoxy, hydroxyl, carboxyl, and carbonyl between graphite sheets, thereby improving cycle performance.

According to the above-mentioned analysis of the micro-oxidation treatment, and further analysis of Examples 1-5, it can be seen that the preferred L₂/L₁ value and L₁/S value are: the L₂/L₁ value is controlled at no higher than 1.4, and the L₁/S value is controlled at the range of 0.05~0.32 µm, the cycle performance may be further improved and the expansion rate of the negative electrode sheet may be reduced.

In addition, further analysis to Examples 2-5 shows that:
① A higher carbonization temperature facilitates to improve the compactness of the structure of spherical natural graphite after densification, and reduce the side reaction with the electrolyte while reducing the length of the internal interface and external interface. Therefore, the battery cycle performance is improved and the expansion of the negative plate is reduced (Examples 2 and 3).
(2) Compared with mechanical densification, fill densification is able to more uniformly reduce the internal pores of the densified spherical natural graphite, making the structure more compact, further reducing the internal interface, and correspondingly reducing the side reactions with the electrolyte. Therefore, the cycle performance of the battery is improved more significantly, and the expansion of the negative electrode sheet may be further reduced (Example 3 and Example 4).
③ Composite graphite and artificial graphite are utilized together as the negative electrode active material. Artificial graphite is a graphite material that has been graphitized at a high temperature. Artificial graphite has a dense structure, fewer internal interface and external interface, and fewer side reactions with the electrolyte. Therefore, the addition of artificial graphite helps to significantly improve the cycle performance of the battery and reduce the expansion of the negative electrode sheet (Example 4 and Example 5).

Therefore, according to the analysis of Examples 2-5, the preferred L₂/L₁ value and L₁/S value are: the L₂/L₁ value is controlled not higher than 1.26, and the L₁/S value is controlled within the range of 0.05~0.29 µm.

## Claims

1. A battery, comprising: a negative electrode sheet, wherein the negative electrode sheet comprises a current collector and an active material layer disposed on a surface of the current collector, the active material layer comprises a natural graphite, wherein: when SOC is 0%, a total length of an internal interface and an external interface of the natural graphite is L₁, when SOC is 100%, the total length of the internal interface and the external interface of the natural graphite is L₂, and L₁ and L₂ satisfy 1< L₂/ L₁<1.8;
wherein a length of the internal interface is a sum of lengths of internal pores of particles of the natural graphite, and a length of the external interface is a sum of circumferences of outer edges of the particles of the natural graphite.

2. The battery according to claim 1, wherein the total length L₁/S of the internal interface and the external interface per unit area of the natural graphite is 0.05~0.5 µm/mm²;
wherein, S is a total cross-sectional area of the natural graphite on the negative electrode sheet.

3. The battery according to claim 2, wherein 1.05≤L₂/L₁≤1.4, and L₁/S is 0.05~0.32 µm/mm².

4. The battery according to claim 3, wherein 1.05≤L₂/L₁≤1.26, and L₁/S is 0.05~0.29 µm/mm².

5. The battery according to claim 4, wherein 1.05≤L₂/L₁≤1.13, and L₁/S is 0.05~0.13 µm/mm².

6. The battery according to claim 5, wherein the active material layer further comprises an artificial graphite, and a mass of the artificial graphite is greater than 0 to 70% of a total mass of a graphite.

7. The battery according to claim 1, wherein a compacted density of the negative electrode sheet is 1.4~1.9 g/cm³.

8. The battery according to claim 1, wherein a particle size D50 of the natural graphite is 2~18 µm.

9. The battery according to claim 1, wherein a surface of the natural graphite is provided with a coating layer, and a mass ratio of the natural graphite to the coating layer is 50:50~95:5.

10. The battery according to claim 9, wherein an interior of the natural graphite is provided with pores, and the pores are provided with a filling medium.

11. The battery according to claim 10, wherein the coating layer and/or the filling medium is bitumen with a softening point of 120°C ~280°C.

12. The battery according to claim 1 or 9, wherein the natural graphite is a slightly oxidized natural graphite.
